(19) Europäisches Patentamt
European Patent Office
Office européen des brevets

(11) **EP 2 865 142 B1**

(12) **EUROPEAN PATENT SPECIFICATION**

(45) Date of publication and mention
of the grant of the patent:
**27.11.2019 Bulletin 2019/48**

(21) Application number: **12735670.7**

(22) Date of filing: **21.06.2012**

(51) Int Cl.:
**H04L 12/805** *(2013.01)*　　**H04L 12/751** *(2013.01)*

(86) International application number:
**PCT/SE2012/050700**

(87) International publication number:
**WO 2013/191605 (27.12.2013 Gazette 2013/52)**

(54) **ADAPTIVE MTU SIZE OPTIMIZATION USING IGP**

ADAPTIVE MTU-GRÖSSENOPTIMIERUNG MITTELS IGP

OPTIMISATION DE TAILLE DE MTU ADAPTATIVE À L'AIDE DU PROTOCOLE IGP

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.04.2015 Bulletin 2015/18**

(73) Proprietor: **Telefonaktiebolaget LM Ericsson
(publ)**
**164 83 Stockholm (SE)**

(72) Inventors:
• **WELIN, Annikki**
  **S-171 60 Solna (SE)**
• **HALLSTRÖM, Lars**
  **S-185 41 Vaxholm (SE)**
• **KÖLHI, Johan**
  **S-185 39 Vaxholm (SE)**
• **THYNI, Tomas**
  **S-175 66 Järfälla (SE)**

(74) Representative: **Ericsson
Patent Development
Torshamnsgatan 21-23
164 80 Stockholm (SE)**

(56) References cited:
**WO-A1-2008/080792　US-A- 5 425 023
US-A1- 2008 159 150　US-A1- 2010 306 391**

## Description

TECHNICAL FIELD

The present invention relates to methods and apparatuses in a node of a data communication network. Particularly, the specification provides methods for determining a path maximum transmission unit MTU size for transmission paths, methods for updating routing tables and routing and/or switching devices for implementing said methods.

BACKGROUND

A path maximum transmission unit size, MTU, of a communications protocol layer is the maximum frame size in bytes of the largest protocol data unit that the layer can forward. MTU size parameters are associated with a network interface card.

A larger size of MTU creates better efficiency because each packet carries more user data while protocol overheads, such as headers or underlying per-packet delays, remain fixed; the resulting higher efficiency means a slight improvement in bulk protocol throughput. A larger MTU size also means processing of fewer packets for the same amount of data. In some systems, per-packet-processing can be a critical performance limitation.

However, this gain is not without problems. Large packets can occupy a slow link for some time, causing delays to following packets and increasing jitter and latency.

Large packets are also problematic in the presence of communications errors; corruption of a single bit in a packet requires that the entire packet be retransmitted. At a given bit error rate larger packets are more likely to be corrupted. Retransmissions of larger packets take longer time to process.

MTU size can vary in different network segments due to multiple encapsulation protocols, such as MPLS, IPSec etc. and this may cause problems such as packet fragmentation, lower performance and/or termination of TCP sessions. This is especially a common problem in mobile backhaul networks where the end-user traffic is encapsulated in tunnels from the mobile system. The traffic can also be further encapsulated in IPSec, the mobile system traffic can then be encapsulated a second or third time by the mobile backhaul networks, e.g. in MPLS, and even a fourth time when back-up tunnels are used.

In order to get efficient throughput of data packets, the MTU size must be small enough to fit within the frame format of the underlying technology end-to-end. If the packet is bigger than the maximum frame size of the underlying network, it is necessary to break up the packet into several pieces, a process called fragmentation. The packets are then sent individually and reassembled into the original message. The fragmentation increases the packet processing, lower the performance and may introduce packet re-ordering.

To find out what the MTU size is along the path, the networks uses path MTU discovery, see e.g. reference [1]. Path MTU Discovery works by setting a Don't Fragment, DF, option bit in the IP headers of outgoing data packets. Then, any device along the path whose MTU size is smaller than the frame size of the sent data packets will drop them, and return an Internet Control Message Protocol, ICMP, Fragmentation Needed (Type 3, Code 4) message containing its MTU size, allowing the source host to reduce its Path MTU parameter appropriately. The process is repeated until the MTU size is small enough to traverse the entire path without fragmentation.

MTU discovery methods are earlier known by US 2008/159150, A1, and WO 2008/080792, A1.

However, the path MTU discovery has one essential drawback. In many networks the ICMP messages are filtered or blocked due to security reasons, and this circumstance will cause the path MTU discovery adaption of data packet frame size to fail.

SUMMARY

One aspect of the present invention is a method for determining a path maximum transmission unit $MTU_{P(n)}$ size for transmission paths between edge nodes in a data communications network and embodiments of the method. Said edge nodes comprises routing and/or switching devices associated with routing tables, which nodes are linked together with link interfaces $L(i)$ constituting transmission paths $P(n)$ for data packet transmission, each link interface $L(i)$ having a link interface maximum transmission unit $MTU_{L(i)}$ size. Said method comprises the step of acquiring a link interface maximum transmission unit $MTU_{L(i)}$ size for a link interface $L(i)$ and the step of updating the routing tables by calculating the path maximum transmission unit $MTU_{P(n)}$ size for each destination wherein the link interface $L(i)$ for the acquired link interface maximum transmission unit $MTU_{L(i)}$ size is involved. The updating further comprises calculating and selecting for each one of said destinations the lowest link interface maximum transmission unit $MTU_{L(i)}$ size of the link interfaces $L(i)$ constituting a transmission path $P(n)$ to said destination as the calculated maximum transmission unit $MTU_{P(n)}$ size, and storing the calculated maximum transmission unit $MTU_{P(n)}$ size for the destination in the routing table.

Another aspect of the present invention is a routing and/or switching device controller arrangement for determining a path maximum transmission unit $MTU_{P(n)}$ size for transmission paths between edge nodes in a data communications network and for updating routing tables associated with routing and/or switching devices in said edge node. The nodes are linked together with link interfaces L(i) constituting transmission paths P(n) for data packet transmission. Each link interface L(i) has a link interface maximum transmission unit $MTU_{L(i)}$ size. Said arrangement comprises acquisition means configured to acquire a link interface maximum transmission unit $MTU_{L(i)}$ size and routing table updating means configured to update the routing table. Said routing table updating means comprises calculating means configured to calculate the path maximum transmission unit $MTU_{P(n)}$ size for each destination, wherein the link interface L(i) for the acquired link interface maximum transmission unit $MTU_{L(i)}$ size is involved. The calculating means is further configured to calculate and select for each one of said destinations the lowest link interface maximum transmission unit $MTU_{L(i)}$ size of the link interfaces L(i) constituting a transmission path P(n) to said destination as the calculated maximum transmission unit $MTU_{P(n)}$ size. The routing table updating means is configured to store the calculated maximum transmission unit $MTU_{P(n)}$ size for the destination in the routing table.

This invention allows efficient throughput in data communications networks such as radio access networks, without packet fragmentation and avoids packet reordering caused by fragmentation.

It further improves the Path MTU discovery process.

This enables optimum use of leased VPN services for mobile backhaul/RAN, such as E-Line, E-LAN, L3-VPN etc.

BRIEF DESCRIPTION OF THE DRAWINGS

The foregoing, and other, objects, features and advantages of the present invention will be more readily understood upon reading the following detailed description in conjunction with the drawings in which:

Figure 1 is a block diagram of an exemplary network in which systems and methods described herein may be implemented;
Figure 2 is a block diagram schematically illustrating an embodiment of a routing and/or switching device according to one aspect of the invention;
Figure 3 is a flowchart illustrating a method according to the invention;
Figure 4 is a flowchart illustrating an embodiment of the method according to the invention;
Figure 5 is a flowchart illustrating further one embodiment the method according to the invention;
Figure 6 is a flowchart illustrating further one embodiment the method according to the invention;
Figure 7 is a flowchart illustrating further one embodiment the method according to the invention;
Figure 8 is a flowchart illustrating another aspect of a method according to the invention;
Figure 9 is a flowchart illustrating further one embodiment the method according to the invention;
Figure 10 is a block diagram of an exemplary network in which systems and methods described herein may be implemented.

DETAILED DESCRIPTION

In the following description, for purposes of explanation and not limitation, specific details are set forth, such as particular circuits, circuit components, techniques, etc. in order to provide a thorough understanding of the present invention. However, it will be apparent to one skilled in the art that the present invention may be practiced in other embodiments that depart from these specific details. In other instances, detailed descriptions of well known methods, devices, and circuits are omitted so as not to obscure the description of the present invention with unnecessary detail.

Herein, a number of equivalent expressions or terms, e.g. path, route, routing path, will be used for a data transmission path between two nodes in a data communications network.

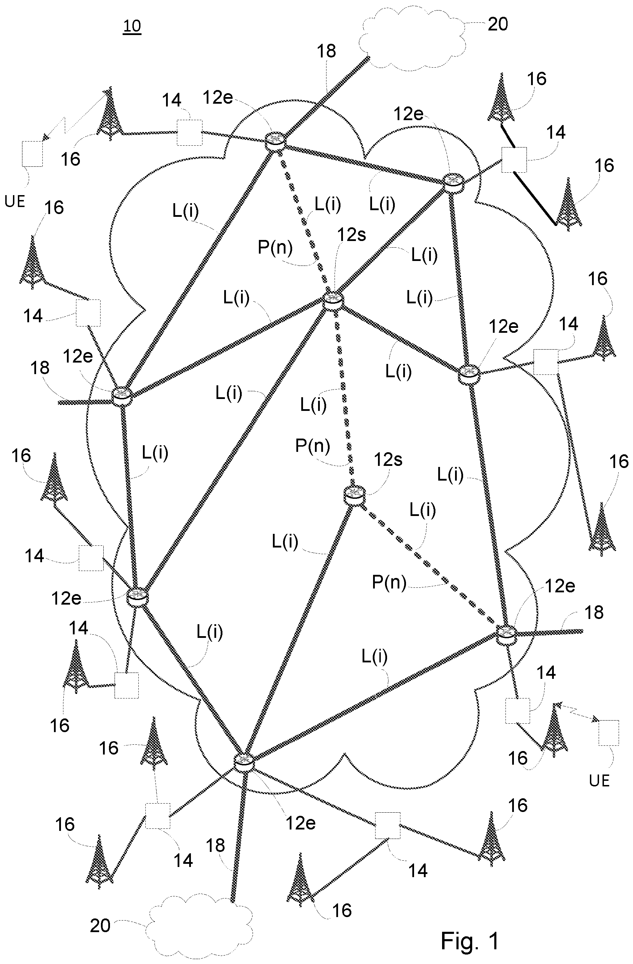

Figure 1 illustrating a data communications network wherein the following aspects and embodiments of the present invention may be applicable and implemented. The network 10 comprises a number of edge nodes 12e and service provider nodes 12s, which are connected via data links L(i):s. The illustrated data communications network 10 is a network connecting a number of Radio Access Networks, RANs. A RAN is responsible for the radio transmission and control of the radio connections with User Equipments, UEs. A RAN comprises one or more Radio Network Systems, RNSs, controlling a number of Base Stations, BSs, handling the radio transmissions and reception within one or more cells. Each BS 16 is connected to a Radio Network Controller, RNC, 14, in the RNS. The RNC 14 controls radio resources and radio connectivity between the UEs and the BSs 16. An RNC is connected to one or more BSs 16 and to a provider edge node, shortened to edge node of the network 10 via a connection that is denoted Iu interface or backhauling link. The edge nodes may comprise gateway functionality, e.g. an SGSN, a GGSN, a SGW or PDW. UEs communicating with a single BS 16 constitute a local sub-network, and the connection between the BS and the rest of the world begins with a backhaul link to the network 10. The backhaul links transport user data on the so-called transport bearers to the edge nodes 12e of the network 10. Some of the edge nodes are also connected via links 18 to other networks 20, e.g.

core networks, Internet, PSTN (Public Switched Telephone Network), LANs (Local Area Networks), Service Provider's network, etc.

As mentioned above, the edge nodes may be gateway nodes, e.g. an SGSN, a GGSN, a SGW or PDW, wherein:

- SGSN: The Serving GPRS Support Node, SGSN, provides a number of tasks focused on the IP elements of the overall system. It provides a variety of services to the UEs, e.g. Packet routing and transfer, Mobility management, Authentication, Attach/detach, Logical link management, charging data, etc.
- GGSN: The Gateway GPRS Support Node, GGSN, organizes the inter-working between a GPRS/EDGE network and external packet switched networks, e.g. Internet and X.25 networks. The GGSN can be considered as a combination of a gateway, router and firewall. In operation, it checks if the user is active, then forwarding the data packets. In the opposite direction, data packets from an UE are routed to the right destination network by the GGSN.
- SGW: The Serving Gateway, SGW, routes and forwards user data packets, while also acting as the mobility anchor for the user plane during inter-eNodeB handovers and as the anchor for mobility between LTE and other 3GPP technologies (terminating S4 interface and relaying the traffic between 2G/3G systems and PGW). For idle state UEs, the SGW terminates the downlink data path and triggers paging when downlink data arrives for the UE. It manages and stores UE contexts, e.g. parameters of the IP bearer service, network internal routing information-PGW: The PDN Gateway provides connectivity from the UE to external packet data networks by being the point of exit and entry of traffic for the UE. A UE may have simultaneous connectivity with more than one PGW for accessing multiple PDNs, Packet Data Networks. The PGW performs policy enforcement, packet filtering for each user, charging support, lawful interception and packet screening. Another key role of the PGW is to act as the anchor for mobility between 3GPP and non-3GPP technologies such as WiMAX and 3GPP2.

Said edge nodes 12e comprises routing and switching devices, e.g. routers, for receiving, directing and transmitting user data packets through the links to their addressed destination. To be able to achieve the directing function, the routing and/or switching device comprises or is associated with a routing table. The routing table, or Routing Information Base RIB, is a data table stored in a router or a networked computer that lists the routes to particular network destinations, and in some cases, metrics e.g. distances, associated with those routes. The routing table contains information about the topology of the network immediately around it. The construction of routing tables is the primary goal of routing protocols. Static routes are entries made in a routing table by non-automatic means and which are fixed rather than being the result of some network topology "discovery" procedure.

Further, a routing table utilizes the same idea that one does when using a map in package delivery. Whenever a node needs to send data to another node on a network, it must know where to send it first. If the node cannot directly connect to the destination node, it has to send it via other nodes along a proper route to the destination node. Service provider nodes do not try to figure out which route(s) might work; instead, a node will send an IP packet to an edge node, which then decides how to route the "package" of data to the correct destination. Each edge node will need to keep track of which way to deliver various packages of data, and for this it uses a Routing Table. A routing table is a database which keeps track of paths, like a map, and allows the edge node to provide this information to the node requesting the information.

With hop-by-hop routing, each routing table lists, for all reachable destinations, the address of the next device along the path to that destination: the next hop. Assuming that the routing tables are consistent, the simple algorithm of relaying packets to their destination's next hop thus suffices to deliver data anywhere in a network. Hop-by-hop is the fundamental characteristic of the IP Internetwork Layer and the OSI Network Layer.

The primary function of a routing and/or switching device is to forward a packet toward its destination network, which is the destination IP address of the packet. To do this, a routing and/or switching device needs to search the routing information stored in its routing table.

A routing table is a data file in RAM that is used to store route information about directly connected and remote networks. The routing table contains network/next hop associations. These associations tell a routing and/or switching device that a particular destination can be optimally reached by sending the packet to a specific routing and/or switching device that represents the "next hop" on the way to the final destination. The next hop association can also be the outgoing or exit interface to the final destination.

The network/exit-interface association can also represent the destination network address of the IP packet. This association occurs on the routing and/or switching device's directly connected networks.

As an example, when a user makes a call with the UE, a radio link is established with the BS 16 and the RNC 14, and the user data packets generated by the UE is forwarded by the backhauling network to the edge node 12e, which reads the address and decides by means of the data in the routing table which route, or data transmission path, to use for reaching the addressed destination. The data packets are then sent via the transmission path through the data communications network 10 to a second edge node 12e, which is connected to the RNS with the BS 16 and RNC 14 serving the addressed and called user and UE. In this example, one transmission path P(n) from a first edge node 12e to a second edge node 12e is illustrated with their involved links L(i) as dashed lines between the involved edge nodes 12e and service provider nodes 12s. If nothing happens to the involved nodes or links, the data packet traffic between the two UEs will pass through this data a path P(n) in both directions point-to-point. If a failure in one of the links or edge or service provider nodes of the established path P(n) occur, a failure mechanism in the nodes will re-route the data packets to another path. If the data communications network constitutes an Interior Gateway Protocol, IGP, network, Link-state protocol messages are sent between the nodes in the network with data for informing about the failed link or node 12e,12s. In this way, all nodes and their routing tables are updated and the router controllers can decide about new routes for the user data traffic.

Said link-state protocol messages are also used in the network in other occasions than failure and breakdowns. One example is when a new node comprising a routing and/or switching device and functionality is connected to the network, said new node is connected to some of the previous nodes and new possible paths P(n) are established. Said link-state protocol messages, or shorter link-state messages are sent to update the routing tables about the new capacity data e.g. available link bandwidth, etc., about the links.

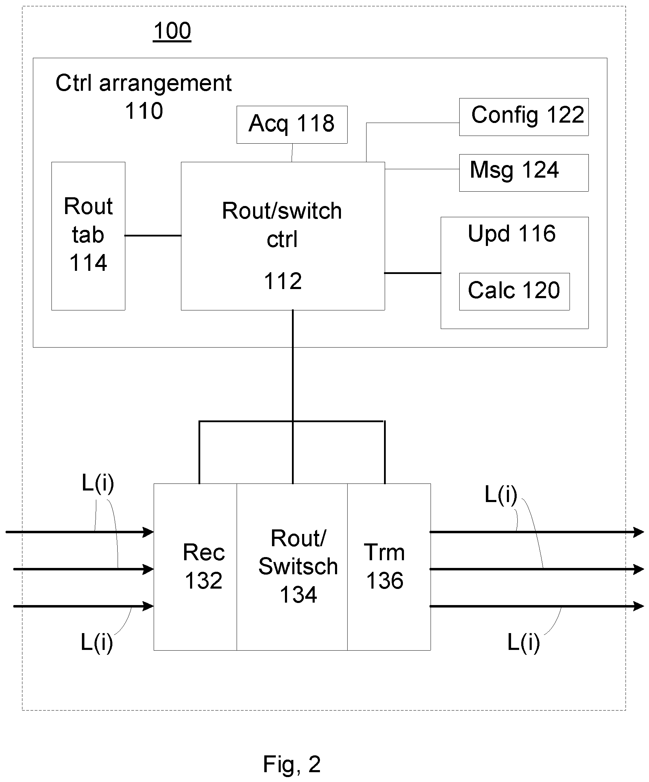

Figure 2 is schematically illustrating an embodiment of a routing and/or switching device according to one aspect of the invention.

According to embodiments of this invention, Interior Gateway Protocols, IGPs, such as Intermediate System to Intermediate System, IS-IS, are adapted and used for signalling the MTU size in each of the logical network interfaces in the mobile backhaul VPN and radio access network.

The MTU size information for each logical link is compared and the maximum MTU size allowed for the routing path will be used in calculation of the maximum path MTU size. This information is added to the routing table to give maximum path MTU size for each route P(n) in the routing table. This is used as the MTU metric for all packets for the specific destination.

The link state routing protocol used in the overlay network such as mobile backhaul for RAN picks up the logical interface MTU size including any underlying protocol encapsulation such as MPLS, IPSec etc.

A new TLV is created for Intermediate System to Intermediate System, IS-IS, protocol. The logical interface MTU size is distributed using a new IS-IS TLV for MTU sizes to all nodes participating in the IGP area. The MTU size information for each logical link is compared and the maximum MTU size allowed for the routing path will be used in calculation of the maximum path MTU size. This information is added to the routing table to give maximum path MTU size for each route in the routing table. This is used as the MTU metric for all packets to the specific destination.

Any dynamic update of the routing path P(n) and routing table will reflect possible path MTU size changes.

Similar functionality in Open Shortest Path First, OSPF, can be achieved using a new OSPF Link-State Advertisement, LSA, type for MTU size.

The arrangement is preferably located in an edge node 12e comprising a routing and/or switching device, e.g. a router. An edge node and the routing/switching device 100 comprises each one a number of known blocks, components and circuits for achieving the different technical functions. Most of the blocks, components and circuits are not essential for the understanding of the present invention and have therefor been omitted of this description and the enclosed drawings.

The routing and/or switching device according to the illustrated embodiment comprises a controller arrangement 110, a receiving device 132, a routing/switching block 134 and a transmitting device 136. The controller arrangement 110 may be a server comprising a data processing means, e.g. a data processor, microprocessor, CPU, computer, etc. and associated computer program software for achieving the technical functions and other functions when said software is executed by the processing means. The controller arrangement 110 is configured to control the routing and/or switching device 100, and it comprises a routing/switching controller 112, which is connected to a routing table 114, adapted for said control purpose. The controller arrangement 110 further comprises routing table updating means 116, acquisition means 118, configuration means 122 and a message generator 124. The updating means 116, the acquisition means 118, the configuration means 122 and the message generator 124 are connected to the controller arrangement 110. A calculating means 120 is provided in the routing table updating means 116.

The calculating means 120 is configured to calculate a destination maximum transmission unit $MTU_{P(n)}$ size to a destination via a certain route P(n), i.e. addressed node within the data communications network. Said calculating means 120 calculates and selects for a destination the lowest maximum transmission unit $MTU_{L(i)}$ size of the link interfaces L(i) constituting a transmission path P(n) to said destination. Said calculation may be performed by comparing the acquired maximum transmission unit $MTU_{L(i)}$ size for each link L(i) involved in the transmission path P(n) to the destination in question. The calculation may be performed according to the equation

$$MTU_{P(n)} = min[MTU_{L(i)}, MTU_{P(n)}] \text{ for L(i) of P(n) to the destination.}$$

The controller arrangement 110 may comprise a message generator 124 be configured to generate a link-state routing protocol message comprising the maximum transmission unit $MTU_{L(i)}$ size for a link L(i) and to order the transmission unit to transmit said generated link-state routing protocol message, if the maximum transmission unit $MTU_{L(i)}$ size for a link L(i) is received.

Further, the controller arrangement 110 may also comprise the Path MTU discovery mechanism and functionality, which is described in the "Background section" of this specification. The control arrangement 110 is therefore configured to handle, generate, transmit and receive Internet Control Message Protocol, ICMP, messages used for sending error messages indicating, for example, that a requested service is not available or that a host or router could not be reached. The node by means of the controller arrangement 110 has therefore the capability to inform a source node, e.g. a smart phone or other User Equipment UE, about the available maximum transmission unit $MTU_{P(n)}$ size to a destination via a certain route P(n) by sending an ICMP message when dropping data packets when their data packet size are exceeding the available maximum transmission unit $MTU_{P(n)}$ size to said destination. The UE could by means of the $MTU_{P(n)}$ size information adapt the size in bits or byte of the data packets and resend them to the destination without problem.

The receiving device 132 and the transmitting device 136 is connected to one or more link interfaces, links, L(i) for receiving and transmitting data packets to destinations both within the data communications network and to destinations, e.g. in a RNS of a RAN, or a Local Area Network LAN, or another Service Provider's data communications network, etc. The receiving device 132 and transmitting device 136 is connect together via a switching/routing block 134, which is configured to direct the incoming data packets to the correct link interface L(i) connected to the transmitter.

According to the illustrated embodiment, the transmitting device 136 is controlled by means of the configuration means 122 in the control arrangement 110 to send data packets not larger than a maximum transmission unit $MTU_{P(n)}$ size indicated in the routing table 114 for the transmission path P(n) between two edge nodes, the routing table 114 comprises a maximum transmission unit $MTU_{P(n)}$ size for the transmissions paths P(n) to other edge nodes of the data communications network. The controller arrangement 110 further involves a calculating means 120 configured to determine by calculating a maximum transmission unit $MTU_{P(n)}$ size for different destination, i.e. each addressable node within the data communication network, from the node wherein the routing and/or switching device is situated.

The acquisition means 118 may be configured to acquire maximum transmission units $MTU_{L(i)}$ size of link interfaces L(i) within the data communications network, for example from a received Link-State protocol message. The routing table updating means 116 is configured to store the calculated maximum transmission unit $MTU_{P(n)}$ size for a transmission P(n) in the routing table 114 or in a memory storage associated to the routing and/or switching device of the node. Further, the acquisition means 118 may be configured to acquire the maximum transmission unit $MTU_{P(n)}$ size for a path P(n) stored in the routing table or in a memory storage associated to the routing and/or switching device of the node. According to one embodiment, the receiver or receiving means 132 is configured to receive a link-state routing protocol message and the acquisition means 118 is configured to acquire the maximum transmission unit $MTU_{L(i)}$ size for a link L(i) inserted in said link-state routing protocol message. Two types of link-state routing protocol messages may be used.

One alternative is a new Intermediate System to Intermediate System, IS-IS, protocol message comprising a Type-Length-Value TLV, which involves a maximum transmission unit $MTU_{L(i)}$ size for one link interface L(i). Alternatively, the IS-IS protocol message may involve more than one $MTU_{L(i)}$ size associated with different link interfaces. The acquisition means is in this case configured to acquire the maximum transmission unit $MTU_{L(i)}$ size for a link L(i) as a Type-Length-Value TLV in said IS-IS protocol message.

Alternatively, the receiving means is configured to receive an Open Shortest Path First (OSPF) Link-State Advertisement, LSA, protocol message and the acquisition means is configured to acquire the maximum transmission unit $MTU_{L(i)}$ size for a link L(i) as a Link-State Advertisement type value in said Open Shortest Path First, OSPF, protocol message.

The different aspects and embodiments of the invention may be implemented in digital electronically circuitry, or in computer hardware, firmware, software, or in combinations of them. Embodiments of the invention may be implemented in a computer program product tangibly embodied in a machine readable storage device for execution by a programmable processor; and method steps of the invention may be performed by a programmable processor executing a program of instructions to perform functions of the invention by operating on input data and generating output.

The different aspects and embodiments of the invention may advantageously be implemented in one or more computer programs that are executable on a programmable system including at least one programmable processor coupled to receive data and instructions from, and to transmit data and instructions to, a data storage system, at least one input device, and at least one output device. Each computer program may be implemented in a high-level procedural or object-oriented programming language, or in assembly or machine language if desired; and in any case, the language may be a compiled or interpreted language.

Generally, a processor will receive instructions and data from a read-only memory and/or a random access memory. Storage devices suitable for tangibly embodying computer program instructions and data include all forms of non-volatile memory, including by way of example semiconductor memory devices, such as EPROM, EEPROM, and flash memory devices; magnetic disks such internal hard disks and removable disks; magneto-optical disks; and CD-ROM disks. Any of the foregoing may be supplemented by, or incorporated in, specially -designed ASICs (Application Specific Integrated Circuits).

How the above described arrangement operates is further understood with reference to the following description of another aspect, which involves embodiments of a method according to the present invention. Said embodiments are adapted to be used in the embodiments of the arrangement described above referring to figure 2.

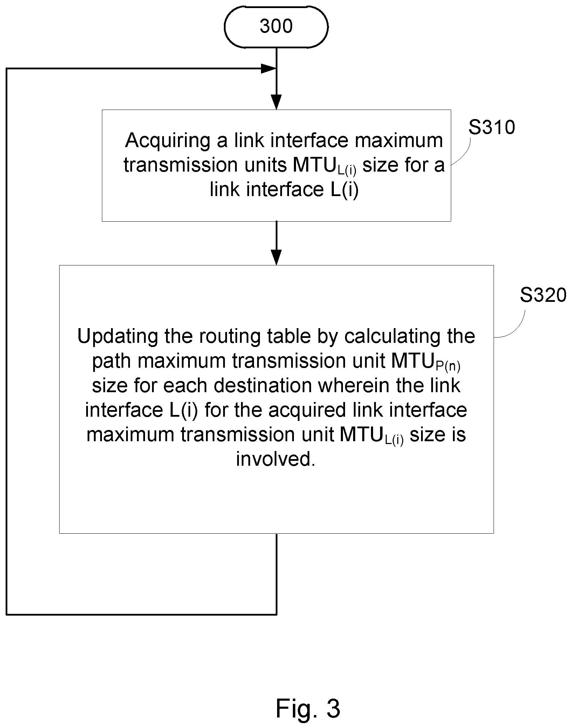

Figure 3 is a flowchart illustrating another aspect of a method according to the invention.

According to said another aspect of the invention, a method 300 for determining a path maximum transmission unit $MTU_{P(n)}$ size for a destination in a data communications network and for updating a routing table in a node is provided, which method enables the method for configuring a transmitter device 136. The routing table is adapted to comprise a path maximum transmission unit $MTU_{P(n)}$ size for each destination in the data communications network via a selected transmission path P(n). Said path maximum transmission unit $MTU_{P(n)}$ size for a destination being determined by the following steps:

S310: Acquiring link interface maximum transmission units $MTU_{L(i)}$ size for a link interface L(i) within the data communications network. The acquisition means118 is configured to perform this step. Different embodiments of performing the step are described in the specification hereafter.

S320: Updating the routing table by calculating the path maximum transmission unit $MTU_{P(n)}$ size for each destination wherein the link interface L(i) for the acquired link interface maximum transmission unit $MTU_{L(i)}$ size is involved. The calculation means 120 is configured to perform this step. The calculating means 120 is configured to calculate a destination maximum transmission unit $MTU_{P(n)}$ size to a destination via a certain route P(n), i.e. addressed node within the data communications network. Said calculating means 120 calculates and selects for a destination the lowest maximum transmission unit $MTU_{L(i)}$ size of the link interfaces L(i) constituting a transmission path P(n) to said destination. Said calculation may be performed by comparing the acquired maximum transmission unit $MTU_{L(i)}$ size for each link L(i) involved in the transmission path P(n) to the destination in question. The calculation may be performed according to the equation:

$$MTU_{P(n)} = min[MTU_{L(i)}, MTU_{P(n)}] \text{ for } L(i) \text{ of } P(n) \text{ to the destination.}$$

If a source node, e.g. UE, is sending data packets where their size are exceeding the available maximum transmission unit $MTU_{P(n)}$ size to said destination, said data packets are dropped if Don't Fragment (DF) option bit in the IP headers of outgoing data packets is set to "do not fragment". The described Path discovery process may be repeated until the data packet size is small enough to traverse the entire path without fragmentation or if the controller arrangement 110 has the capability to inform a source node about the available maximum transmission unit $MTU_{P(n)}$ size to a destination via a certain route P(n) by sending an ICMP message when dropping data. The UE could by means of the $MTU_{P(n)}$ size information adapt the size of the data packets directly and resend them to the destination without repetition and problem. This improve the effectiveness of the system and the network. If Don't Fragment, DF, option bit is not set, fragmentation may be performed in the node. However, the controller arrangement 110 in the node may be set to only drop the data packets without fragmentation and send an ICMP message.

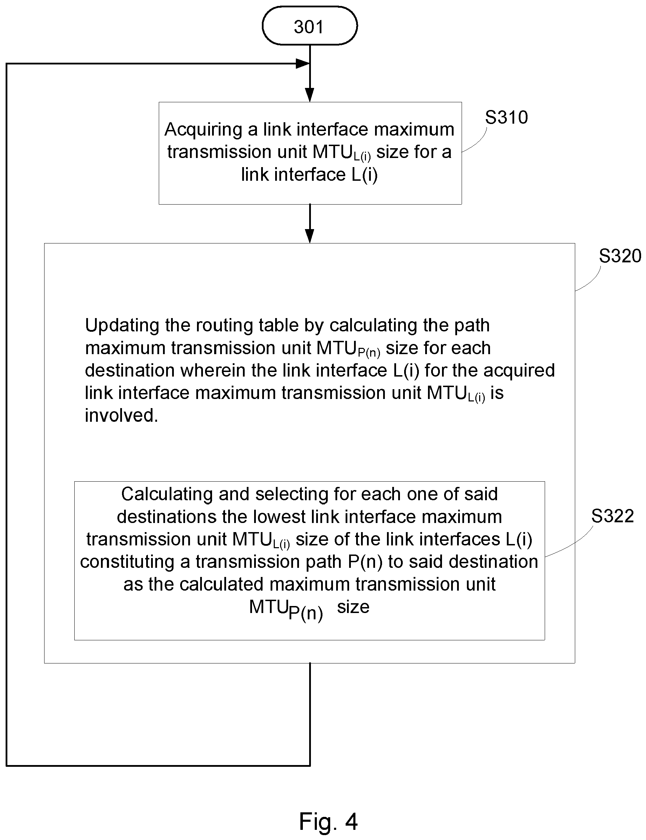

Figure 4 is a flowchart illustrating an embodiment 301 of said another aspect of the method 300 according to the invention.

According to this embodiment 301 of the method 300 for determining a path maximum transmission unit $MTU_{P(n)}$ size for a destination in a data communications network and for updating a routing table, the calculating of the path maximum transmission unit $MTU_{P(n)}$ size in the updating step S320 may comprise:

S322: Calculating and selecting for each one of said destinations the lowest link interface maximum transmission unit $MTU_{L(i)}$ size of the link interfaces L(i) constituting a transmission path P(n) to said destination. The calculation means is configured to calculate the maximum transmission unit $MTU_{P(n)}$ size for a destination, said calculation may be performed by comparing the acquired maximum transmission unit $MTU_{L(i)}$ size for each link L(i) involved in the transmission path P(n) to the destination in question. The calculation may be performed according to the equation:

$$MTU_{P(n)} = min[MTU_{L(i)}, MTU_{P(n)}] \text{ for } L(i) \text{ of } P(n) \text{ to the destination.}$$

If the acquired $MTU_{L(i)}$ size is less than the $MTU_{P(n)}$ size for the destination in question in the routing table, the new $MTU_{P(n)}$ size is set to the acquired $MTU_{L(i)}$ size, i.e. $MTU_{L(i)} = MTU_{P(n)}$. If the $MTU_{P(n)}$ size for the destination in question in the routing table is less than the acquired $MTU_{L(i)}$ size, the $MTU_{P(n)}$ size is not changed, i.e. $MTU_{P(n)} = MTU_{P(n)}$.

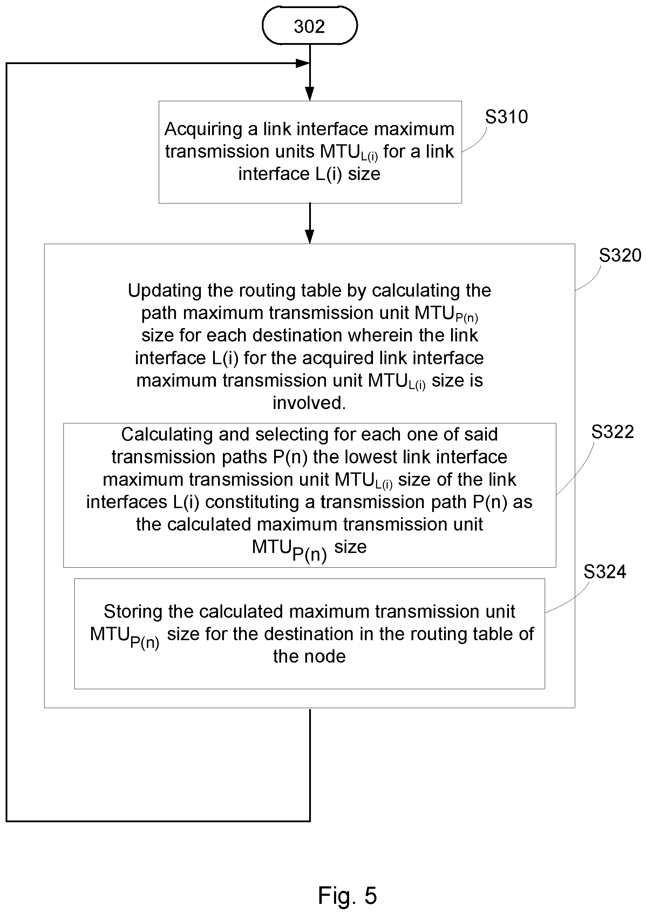

Figure 5 is a flowchart illustrating an embodiment 302 of said another aspect of the method 300 according to the invention.

According to this embodiment 302 of the method 300 for determining a path maximum transmission unit $MTU_{P(n)}$ size for a destination in a data communications network and for updating a routing table, the calculating of the path maximum transmission unit $MTU_{P(n)}$ size in the updating step S320 may comprise:

S322: Calculating and selecting for each one of said destinations the lowest link interface maximum transmission unit $MTU_{L(i)}$ size of the link interfaces L(i) constituting a transmission path P(n) to said destination. The calculation means 120 is configured to perform this step as described.

S324: Storing the calculated maximum transmission unit $MTU_{P(n)}$ size for the destination in the routing table of the node. The routing table updating means 116 is configured to store the calculated maximum transmission unit $MTU_{P(n)}$ size for the destination in said routing table.

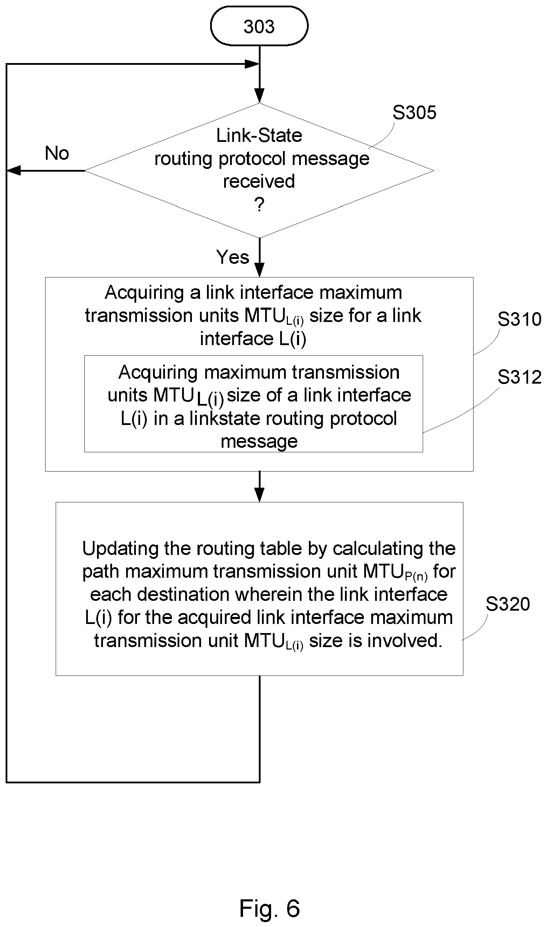

Figure 6 is a flowchart illustrating an embodiment 303 of said another aspect of the method 300 according to the invention.

According to this embodiment 303 of the method 300 for determining a path maximum transmission unit $MTU_{P(n)}$ size for a destination in a data communications network and for updating a routing table, this embodiment involves steps S310 and S320. It may also involve the sub-steps S322 and S324. However, said steps may only be performed if a link-state routing protocol message is received. If said criteria is fulfilled, yes, the controller of the arrangement performs steps S310 and steps 320. If not a link-state routing protocol message is received, the criteria is not fulfilled, No, and said steps is not performed. Thus, the embodiment 303 also involves the following steps:

S305: Link-state routing protocol message received? Acquiring maximum transmission units $MTU_{L(i)}$ size for a link interface L(i) from a received link-state protocol message (S312), if a link-state routing protocol message is received. If "Yes", perform steps S310 and S320. The step S310 also comprises the sub-step S312. The controller 112 may be adapted to perform this step.

S312: Acquiring maximum transmission units $MTU_{L(i)}$ size for a link interface L(i) from the received link-state protocol message. If said message is an Intermediate System to Intermediate System, IS-IS, protocol message, the maximum transmission unit $MTU_{L(i)}$ size for a link L(i) is a Type-Length-Value, TLV. Alternatively, said message is an Open Shortest Path First, OSPF, protocol message, then the link interface maximum transmission unit $MTU_{L(i)}$ size is a Link-State Advertisement, LSA, type value. The acquisition means is therefore configured to acquire the $MTU_{L(i)}$ size either from the Intermediate System to Intermediate System protocol message or the Open Shortest Path First, OSPF, protocol message, depending on which link-state routing protocol that is used. The calculating means 120 performs steps S320 and S322 and the result is sent by the routing table updating means 116, which updates the routing table 114 with the result.

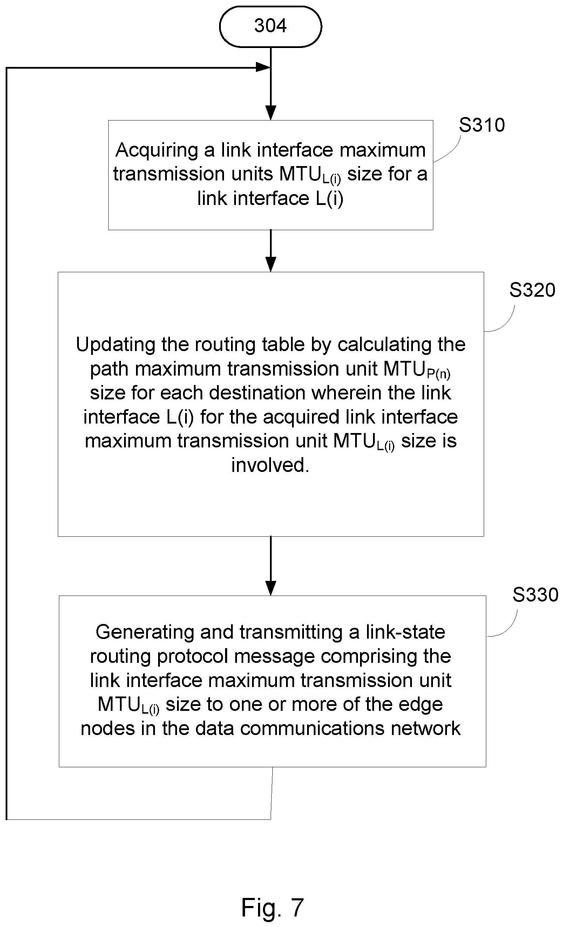

Figure 7 is a flowchart illustrating an embodiment 304 of said another aspect of the method 300 according to the invention.

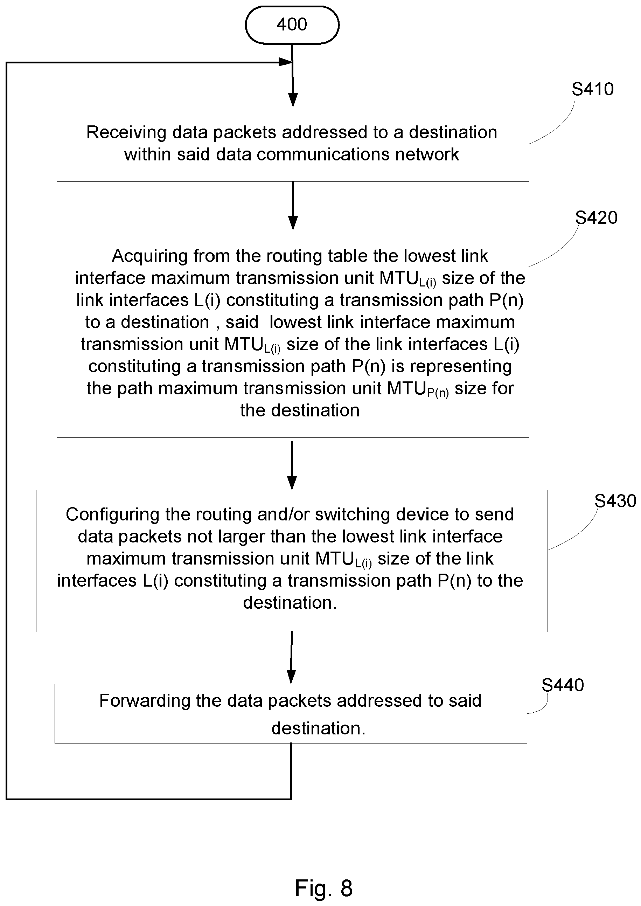

According to this embodiment 304 of the method 300 for determining a path maximum transmission unit $MTU_{P(n)}$ size for a destination in a data communications network and for updating a routing table, this embodiment involves steps S310 and S320. It may also involve the sub-steps S305, S322 and S324 even though they are not separately showed in figure 8. The present embodiment 304 also involves the following step:

S330: Generating and transmitting a link-state routing protocol message comprising the link interface maximum transmission unit $MTU_{L(i)}$ size to one or more of the edge nodes in the data communications network. The message generator 124 may be adapted to generate said message and by means of the transmitter device 136 forward the message to other nodes of the communications network, preferably other neighbour nodes, especially other neighbour edge nodes.

Figure 8 is a flowchart illustrating one aspect of a method according to the invention. The method 400 is used for forwarding data packets to be sent along a transmission path from a first node to a second node within a data communication network. The user packets are addressed to a destination. The second node is the addressed destination, which preferably is an edge node.

The data communications network comprises a number of nodes and edge nodes linked together with link interfaces L(i), each link interface L(i) having a link interface maximum transmission unit $MTU_{L(i)}$ size. Each edge node comprises a routing table associated with a routing and/or switching device. The method 400 is provided in one or more of said edge nodes, and in each of said nodes the method comprises following steps:

S410: Receiving data packets addressed to a destination within said data communications network. The receiving device 132 receives the data packets. The headers of the data packets are read by the controller arrangement 110, and the destination of the data packets are determined by means of the routing table 114 and the routing/switching controller 112.

S420: Acquiring from the routing table the lowest link interface maximum transmission unit $MTU_{L(i)}$ size of the link interfaces L(i) constituting a transmission path P(n) to said destination, said lowest link interface maximum transmission unit $MTU_{L(i)}$ size representing the path maximum transmission unit $MTU_{P(n)}$ size for the destination. The acquisition means 118 and the routing/switching controller 112 acquires and processes the stored information in the routing table 114 and determines the transmission path for the destination and the path maximum transmission unit $MTU_{P(n)}$ size for the destination.

S430: Configuring the routing and/or switching device to send data packets not larger than the lowest link interface maximum transmission unit $MTU_{L(i)}$ size of the link interfaces L(i) constituting a transmission path P(n) to said destination. The controller arrangement 110 comprises a configuring means 122 which is adapted to set the routing and/or switching device to send data packets not larger than the lowest link interface maximum transmission unit $MTU_{L(i)}$ size of the link interfaces L(i) indicated in the routing table as a maximum transmission unit size $MTU_{P(n)}$ for said destination.

S440: Forwarding the data packets addressed to said destination. The routing/switching controller 112 controls the routing/switching means 134 and the transmitter 136 to direct the data packets to the link interface L(i) of said indicated routing path P(n) for transfer to the addressed destination.

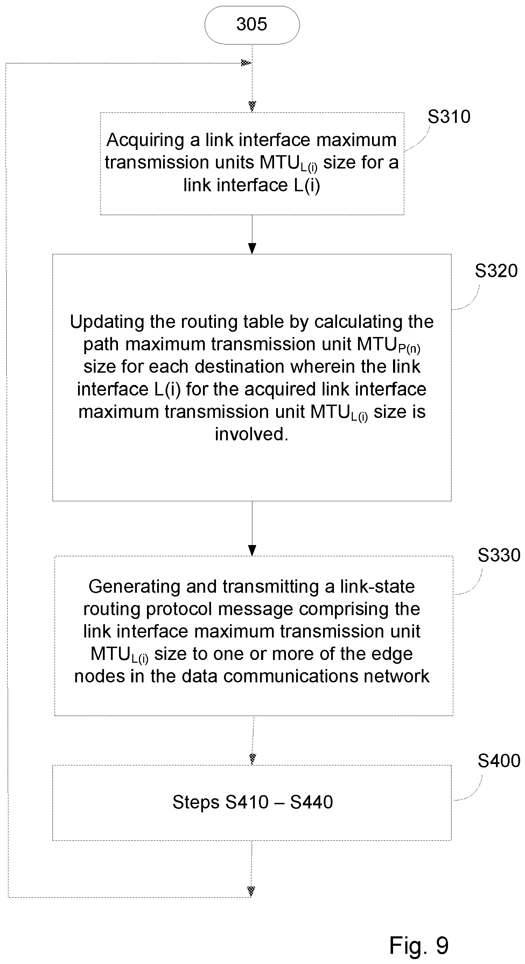

According to one embodiment, the steps of method 400 may be integrated with any of the embodiments of method 300. Figure 9 is a flowchart illustrating an embodiment 305 of said another aspect of the method 300 according to the invention.

According to this embodiment 305 of the method 300 for determining a path maximum transmission unit $MTU_{P(n)}$ size for a destination in a data communications network and for updating a routing table, this embodiment involves steps S310 and S320. It may also involve the sub-steps S305, S312, S322 and S324 even though they are not separately showed in figure 9. As all steps already have been presented and commented in connection with figures 3-8, no further comments are necessary here.

By means of the methods and routing and/or switching devices presented above, the routing tables will comprise maximum transmission unit size $MTU_{P(n)}$ for different destinations, i.e. transmission paths P(n). In the following, some few examples of different transmission paths P(n) in a data communications network are illustrated. For the understanding of the present invention, the calculated and stored maximum transmission unit size $MTU_{P(n)}$ for the different destinations and routing paths in the routing tables associated with routing and/or switching devices in different edge nodes are presented.

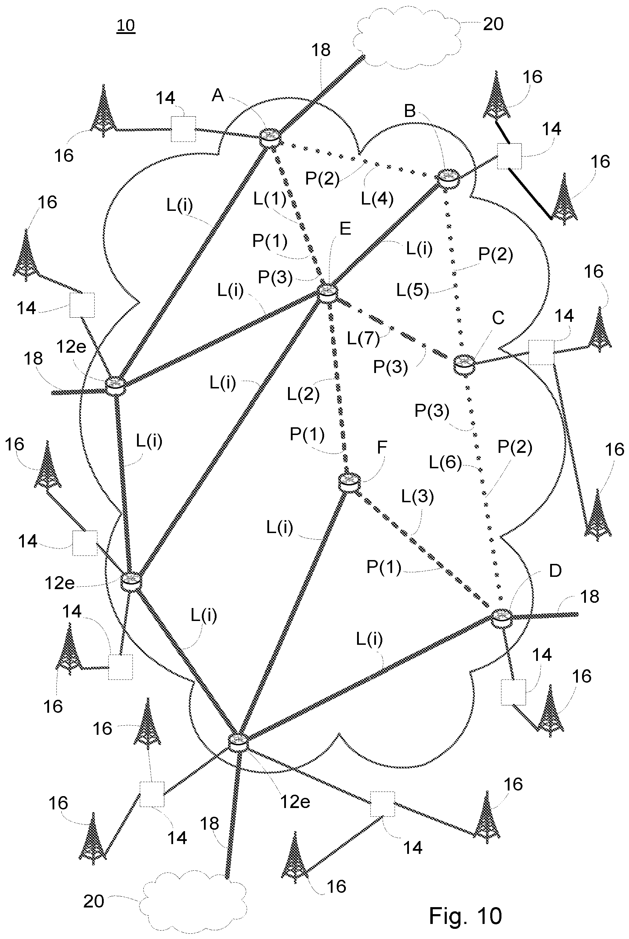

Figure 10 is illustrating the same data communication network as in figure 1. However, in figure 10 three different data transmission paths P(1), P(2) and P(3) are illustrated. The links L(1), L(2) and L(3) of the first data path P(1) are illustrated with dashed lines and the links L(4), L(5) and L(6) of the second data path P(2) are illustrated with dotted lines. The third data path P(3) shares the first link L(1), dashed line, with P(1), and P(3) shares the third link L(6), dotted line, with P(2). The second link L(7) of P(3) is a dot-dashed line,

Each of the links L(i) has an individual maximum transmission unit $MTU_{L(i)}$ size. Following table lists the $MTU_{L(i)}$ size of each link interface chosen in the example:

Table 1: Max $MTU_{L(i)}$ size in a link interface i

| L(i) | Max $MTU_{L(i)}$ |
|------|------------------|
| L(1) | 1500 |
| L(2) | 1500 |
| L(3) | 1500 |
| L(4) | 1500 |
| L(5) | 1500 |
| L(6) | 1500 |
| L(7) | 1500 |

Further, the nodes of the data paths are individually marked as A, B, C, D, E, and F. Each edge node A, B, C and D is an edge node and comprises a routing table. Each of said nodes may be a first node having a routing table wherein the maximum transmission unit $MTU_{P(n)}$ size to a destination, i.e. a second node, is stated. Each destination corresponds to a selected route or transmission path P(n) for the data packets from the first node to the second node.

As an example, the content of the routing table in node A for the destination B corresponding to route P(2) via link L(4), C corresponding to route P(3) via links L(1) and L(5), D corresponding to route P(1) via links L(1), L(2) and L(3):

Table 2: Routing table router in node A

| Destination | Max path MTU |
|---|---|
| B | 1500 |
| C | 1420 |
| D | 1500 |

Thus, the content of the routing table in node B for the destination A corresponding to a route P(n) via link L(4), C corresponding to a route P(n) via link L(5), D corresponding to route P(n) via links L(5) and L(6):

Table 3: Routing table router in node B

| Destination | Max path MTU |
|---|---|
| A | 1500 |
| C | 1460 |
| D | 1420 |

The content of the routing table in node C for the destination A corresponding to a route P(n) via link L(5) and L(4), B corresponding to a route P(n) via link L(5), D corresponding to route P(n) via link L(6):

Table 4: Routing table router in node C

| Destination | Max path MTU |
|---|---|
| A | 1460 |
| B | 1460 |
| D | 1420 |

The content of the routing table in node D for the destination A corresponding to a route P(n) via link L(5) and L(4), B corresponding to a route P(n) via link L(5), and C corresponding to route P(3) via links L(3), L(2), and L(1):

Table 5: Routing table router in node C

| Destination | Max path MTU |
|---|---|
| A | 1460 |
| B | 1460 |
| D | 1500 |

IGP protocols

A number of protocols are addressed in the disclosure. Therefore, a short presentation of the protocols of interest is therefore necessary.

The present invention relates to the class of protocols called Link-state Routing Protocols. A link-state routing protocol is one of the two main classes of routing protocols used in packet switching networks for computer communications (the other is the distance-vector routing protocol). Examples of link-state routing protocols include OSPF and IS-IS.

The link-state protocol is performed by every switching node in the network. The basic concept of link-state routing is that every node constructs a map of the connectivity to the network, in the form of a graph, showing which nodes are connected to which other nodes. Each node then independently calculates the next best logical path from it to every possible destination in the network. The collection of best paths will then form the node's routing table.

This contrasts with distance-vector routing protocols, which work by having each node share its routing table with its neighbours. In a link-state protocol the only information passed between nodes is connectivity related.

Link state algorithms are sometimes characterized informally as each router 'telling the world about its neighbours'.

Intermediate System To Intermediate System, IS-IS, is a routing protocol designed to move information efficiently within a computer network, a group of physically connected computers or similar devices. It accomplishes this by determining the best route for datagrams through a packet-switched network and it is described e.g. in reference [2]. The protocol was defined in ISO/IEC 10589:2002 as an international standard within the Open Systems Interconnection, OSI, reference design. Though originally an ISO standard, the IETF republished the protocol as an Internet Standard in RFC 1142. IS-IS has been called "the de facto standard for large service provider network backbones."

IS-IS is an interior gateway protocol, designed for use within an administrative domain or network. This is in contrast to Exterior Gateway Protocols, primarily Border Gateway Protocol (BGP), which is used for routing between autonomous systems (RFC 1930).

IS-IS is a link-state routing protocol, operating by reliably flooding link state information throughout a network of routers. Each IS-IS router independently builds a database of the network's topology, aggregating the flooded network information. Like the OSPF protocol, IS-IS uses Dijkstra's algorithm for computing the best path through the network. Packets (datagrams) are then forwarded, based on the computed ideal path, through the network to the destination.

Open Shortest Path First (OSPF) is an adaptive routing protocol for Internet Protocol (IP) networks. It uses a link state routing algorithm and falls into the group of interior routing protocols, operating within a single autonomous system (AS). It is defined as OSPF Version 2 in RFC 2328 (1998) for IPv4. The updates for IPv6 are specified as OSPF Version 3 in RFC 5340 (2008).

OSPF is perhaps the most widely-used Interior Gateway Protocol (IGP) in large enterprise networks. IS-IS is more common in large service provider networks. The most widely-used exterior gateway protocol is the Border Gateway Protocol (BGP), the principal routing protocol between autonomous systems on the Internet.

OSPF is an interior gateway protocol that routes Internet Protocol (IP) packets solely within a single routing domain (autonomous system). It gathers link state information from available routers and constructs a topology map of the network. The topology determines the routing table presented to the Internet Layer which makes routing decisions based solely on the destination IP address found in IP packets. OSPF was designed to support variable-length subnet masking (VLSM) or Classless Inter-Domain Routing (CIDR) addressing models.

OSPF detects changes in the topology, such as link failures, very quickly and converges on a new loop-free routing structure within seconds. It computes the shortest path tree for each route using a method based on Dijkstra's algorithm, a shortest path first algorithm.

The link-state information is maintained on each routing and/or switching device as a link-state database (LSDB) which is a tree-image of the entire network topology. Identical copies of the LSDB are periodically updated through flooding on all OSPF routers.

The OSPF routing policies to construct a route table are governed by link cost factors (external metrics) associated with each routing interface. Cost factors may be the distance of a router (round-trip time), network throughput of a link, or link availability and reliability, expressed as simple unit less numbers. This provides a dynamic process of traffic load balancing between routes of equal cost.

Both IS-IS and OSPF are link state protocols, and both use the same Dijkstra algorithm for computing the best path through the network. As a result, they are conceptually similar. Both support variable length subnet masks, can use multicast to discover neighbouring routers using hello packets, and can support authentication of routing updates.

While OSPF is natively built to route IP and is itself a Layer 3 protocol that runs on top of IP, IS-IS is natively an OSI network layer protocol (it is at the same layer as CLNS). The widespread adoption of IP worldwide may have contributed to OSPF's popularity. IS-IS does not use IP to carry routing information messages. IS-IS is neutral regarding the type of network addresses for which it can route. OSPF, on the other hand, was designed for IPv4. This allowed IS-IS to be easily used to support IPv6. To operate with IPv6 networks, the OSPF protocol was rewritten in OSPF v3 (as specified in RFC 2740).

IS-IS routers build a topological representation of the network. This map indicates the subnets which each IS-IS router can reach, and the lowest-cost (shortest) path to a subnet is used to forward traffic.

IS-IS differs from OSPF in the way that "areas" are defined and routed between. IS-IS routers are designated as being: Level 1 (intra-area); Level 2 (inter area); or Level 1-2 (both). Level 2 routers are inter area routers that can only form relationships with other Level 2 routers. Routing information is exchanged between Level 1 routers and other Level 1 routers, and Level 2 routers only exchange information with other Level 2 routers. Level 1-2 routers exchange information with both levels and are used to connect the inter area routers with the intra area routers. In OSPF, areas are delineated on the interface such that an area border router (ABR) is actually in two or more areas at once, effectively creating the borders between areas inside the ABR, whereas in IS-IS area borders are in between routers, designated as Level 2 or Level 1-2. The result is that an IS-IS router is only ever a part of a single area. IS-IS also does not require Area 0 (Area Zero) to be the backbone area through which all inter-area traffic must pass. The logical view is that OSPF creates something of a spider web or star topology of many areas all attached directly to Area Zero and IS-IS by contrast creates a logical topology of a backbone of Level 2 routers with branches of Level 1-2 and Level 1 routers forming the individual areas.

IS-IS also differs from OSPF in the methods by which it reliably floods topology and topology change information through the network. However, the basic concepts are similar.

OSPF has a larger set of extensions and optional features. However IS-IS is less "chatty" and can scale to support larger networks. Given the same set of resources, IS-IS can support more routers in an area than OSPF. This has contributed to IS-IS as an ISP-scale protocol.

The Internet Control Message Protocol, ICMP, is one of the core protocols of the Internet Protocol Suite. It is chiefly used by the operating systems of networked computers to send error messages indicating, for example, that a requested service is not available or that a host or router could not be reached. ICMP can also be used to relay query messages.

ICMP differs from transport protocols such as TCP and UDP in that it is not typically used to exchange data between systems, nor is it regularly employed by end-user network applications (with the exception of some diagnostic tools like ping and trace route).

ICMP for Internet Protocol version 4 (IPv4) is also known as ICMPv4. IPv6 has a similar protocol, ICMPv6.

A new Intermediate System to Intermediate System, IS-IS, protocol message comprising a Type-Length-Value TLV, which involves a maximum transmission unit $MTU_{L(i)}$ size for one link interface L(i) is provided. Alternatively, the IS-IS protocol message may involve more than one $MTU_{L(i)}$ size associated with different link interfaces. A routing and/or switching device, e.g. a router, is therefore configured to acquire the maximum transmission unit $MTU_{L(i)}$ size for a link L(i) as a Type-Length-Value TLV in said IS-IS protocol message. Further, a routing and/or switching device, e.g. a router, is further provided, which is adapted to generate and distribute the new Intermediate System to Intermediate System, IS-IS, protocol message comprising a Type-Length-Value TLV, which involves a maximum transmission unit $MTU_{L(i)}$ size for one link interface L(i), among other routing and/or switching devices in a data communication network.

Further, an Open Shortest Path First, OSPF, protocol message is provided wherein the maximum transmission unit $MTU_{L(i)}$ size for a link L(i) is inserted as a Link-State Advertisement, LSA, type value is inserted. A routing and/or switching device, e.g. a router, is further provided, which is adapted to generate and distribute the new Open Shortest Path First OSPF protocol message comprising the maximum transmission unit $MTU_{L(i)}$ size for a link L(i) as a Link-State Advertisement, LSA, type value among other routing and/or switching devices in a data communication network.

By means of the new proposed new Link-State protocols, the described methods and routing and/or switching devices, the object to avoid data packet fragmentation and problems related to data fragmentation in data communication networks is achieved.

A number of embodiments of the present invention have been described. It will be understood that various modifications may be made without departing from the scope of the invention. Therefore, other implementations are within the scope of the following claims defining the invention.

Reference list:

[1] Path MTU discovery described by http://tols.ietf.org/html/rfc1191;

[2] IS-IS described by http://tols.ietf.org/rfc/rfc1195.txt

**Claims**

1. A method for determining a path maximum transmission unit $MTU_{P(n)}$ size for transmission paths between edge nodes in a data communications network and for updating routing tables associated with routing and/or switching devices in said edge nodes, which are linked together with link interfaces L(i) constituting transmission paths P(n) for data packet transmission, each link interface L(i) having a link interface maximum transmission unit $MTU_{L(i)}$ size, said method comprises the steps of:

- Acquiring a link interface maximum transmission unit $MTU_{L(i)}$ size for a link interface L(i) (S310);
- Updating the routing table by calculating the path maximum transmission unit $MTU_{P(n)}$ size for each destination wherein the link interface L(i) for the acquired link interface maximum transmission unit $MTU_{L(i)}$ size is involved (S320), wherein the updating comprises:

- Calculating and selecting for each one of said destinations the lowest link interface maximum transmission unit $MTU_{L(i)}$ size of the link interfaces L(i) constituting a transmission path P(n) to said destination as the calculated maximum transmission unit $MTU_{P(n)}$ size (S322);

- Storing the calculated maximum transmission unit $MTU_{P(n)}$ size for the destination in the routing table (S324).

2. The method according to claim 1, wherein the acquiring step further comprises the step of:

- Acquiring maximum transmission units $MTU_{L(i)}$ size for a link interface L(i) from a received link-state protocol message (S312), if a link-state routing protocol message is received (S305).

3. The method according to any of claims 1 or 2, wherein the method further comprises the step of:

- Generating and forwarding a link-state routing protocol message comprising the link interface maximum transmission unit $MTU_{L(i)}$ size to one or more of the edge nodes in the data communications network (S330).

4. The method according to claim 2 or 3, wherein the link-state protocol message is an Intermediate System to Intermediate System, IS-IS, protocol message comprising the maximum transmission unit $MTU_{L(i)}$ size for a link L(i) as a Type-Length-Value, TLV.

5. The method according to claim 2 or 3, wherein the received link-state protocol message is an Open Shortest Path First, OSPF, protocol message comprising the maximum transmission unit $MTU_{L(i)}$ size for a link L(i) as a Link-State Advertisement LSA type value.

6. The method according to any of claims 1 - 5, wherein the method comprises the step of:

- Receiving data packets addressed to a destination within said data communication network (S410);
- Acquiring from the routing table the lowest link interface maximum transmission unit $MTU_{L(i)}$ size of the link interfaces L(i) constituting a transmission path P(n) to said destination, said lowest link interface maximum transmission unit $MTU_{L(i)}$ size of the link interfaces L(i) constituting a transmission path P(n) representing the path maximum transmission unit $MTU_{P(n)}$ size for the destination (S420).
- Configuring the routing and/or switching device to send data packets not larger than the lowest link interface maximum transmission unit $MTU_{L(i)}$ size of the link interfaces L(i) constituting a transmission path P(n) to said destination (S430).
- Forwarding the data packets addressed to said destination (S440).

7. A routing and/or switching device controller arrangement (110) for determining a path maximum transmission unit $MTU_{P(n)}$ size for transmission paths between edge nodes in a data communications network and for updating routing tables (114) associated with routing and/or switching devices (100) in said edge nodes, which are linked together with link interfaces L(i) constituting transmission paths P(n) for data packet transmission, each link interface L(i) having a link interface maximum transmission unit $MTU_{L(i)}$ size, said arrangement (110) comprises acquisition means (118) configured to acquire a link interface maximum transmission unit $MTU_{L(i)}$ size and routing table updating means (116) configured to update the routing table (114), wherein said routing table updating means (116) comprises calculating means (120) configured to calculate the path maximum transmission unit $MTU_{P(n)}$ size for each destination wherein the link interface L(i) for the acquired link interface maximum transmission unit $MTU_{L(i)}$ size is involved and wherein the calculating means (120) is further configured to calculate and select for each one of said destinations the lowest link interface maximum transmission unit $MTU_{L(i)}$ size of the link interfaces L(i) constituting a transmission path P(n) to said destination as the calculated maximum transmission unit $MTU_{P(n)}$ size, and wherein the routing table updating means (116) is configured to store the calculated maximum transmission unit $MTU_{P(n)}$ size for the destination in the routing table (114).

8. The arrangement (110) according to claim 7, wherein the acquisition means (114) further is configured to acquire maximum transmission units $MTU_{L(i)}$ size for a link interface L(i) from a received link-state protocol message, if a link-state routing protocol message is received by the .

9. The arrangement (110) according to any of claims 7 or 8, wherein the arrangement comprises a message generator (124) configured to generate and forward a link-state routing protocol message comprising the link interface maximum transmission unit $MTU_{L(i)}$ size to one or more of the edge nodes in the data communications network.

10. The arrangement according to claim 8 or 9, wherein the link-state protocol message is an Intermediate System to Intermediate System, IS-IS, protocol message comprising the maximum transmission unit $MTU_{L(i)}$ size for a link L(i) as a Type-Length-Value,TLV.

11. The arrangement according to claim 8 or 9, wherein the link-state protocol message is an Open Shortest Path First, OSPF, protocol message comprising the maximum transmission unit $MTU_{L(i)}$ size for a link L(i) as a Link-State Advertisement LSA type value.

**Patentansprüche**

1. Verfahren zum Bestimmen einer Weg-Höchstübertragungseinheits- $MTU_{P(n)}$ Größe für Übertragungswege zwischen Kantenknoten in einem Datenkommunikationsnetzwerk und zum Aktualisieren von Routing-Tabellen, die mit Routing- und/oder Vermittlungsvorrichtungen in den Kantenknoten verknüpft sind, die mit Verbindungsschnittstellen L(i) zusammen verbunden sind, die Übertragungswege P(n) zur Datenpaketübertragung begründen, wobei jede Verbindungsschnittstelle L(i) eine Verbindungsschnittstellen-Höchstübertragungseinheits- $MTU_{L(i)}$ Größe aufweist, wobei das Verfahren die folgenden Schritte umfasst:

- Erfassen einer Verbindungsschnittstellen-Höchstübertragungseinheits-$MTU_{L(i)}$ Größe für eine Verbindungsschnittstelle L(i) (S310);
- Aktualisieren der Routing-Tabelle durch Berechnen der Weg-Höchstübertragungseinheits- $MTU_{P(n)}$ Größe für jeden Bestimmungsort, wobei die Verbindungsschnittstelle L(i) für die erfasste Verbindungsschnittstellen-Höchstübertragungseinheits- $MTU_{L(i)}$ Größe einbezogen wird (S320), wobei das Aktualisieren umfasst:

- Berechnen und Auswählen, für jeden der Bestimmungsorte, der kleinsten Verbindungsschnittstellen-Höchstübertragungseinheits- $MTU_{L(i)}$ Größe der Verbindungsschnittstellen L(i), die einen Übertragungsweg P(n) zum Bestimmungsort begründen, als die berechnete Höchstübertragungseinheits- $MTU_{P(n)}$ Größe (S322);
- Speichern der berechneten Höchstübertragungseinheits- $MTU_{P(n)}$ Größe für den Bestimmungsort in der Routing-Tabelle (S324).

2. Verfahren nach Anspruch 1, wobei der Schritt des Erfassens weiter den folgenden Schritt umfasst:

- Erfassen einer Höchstübertragungseinheiten- $MTU_{L(i)}$ Größe für eine Verbindungsschnittstelle L(i) von einer empfangenen Verbindungszustand-Protokollnachricht (S312), falls eine Verbindungszustand-Routing-Protokollnachricht empfangen wird (S305).

3. Verfahren nach einem der Ansprüche 1 oder 2, wobei das Verfahren weiter den folgenden Schritt umfasst:

- Generieren und Weiterleiten einer Verbindungszustand-Routing-Protokollnachricht, umfassend die Verbindungsschnittstellen-Höchstübertragungseinheits- $MTU_{L(i)}$ Größe, an einen oder mehrere der Kantenknoten im Datenkommunikationsnetzwerk (S330).

4. Verfahren nach Anspruch 2 oder 3, wobei die Verbindungszustand-Protokollnachricht eine Intermediate System to Intermediate System-, IS-IS-, Protokollnachricht ist, umfassend die Höchstübertragungseinheits- $MTU_{L(i)}$ Größe für eine Verbindung L(i) als einen Typ-Länge-Wert, TLV.

5. Verfahren nach Anspruch 2 oder 3, wobei die empfangene Verbindungszustand-Protokollnachricht eine Open Shortest Path First-, OSPF-, Protokollnachricht ist, umfassend die Höchstübertragungseinheits- $MTU_{L(i)}$ Größe für eine Verbindung L(i) als einen Wert vom Link-State Advertisement LSA-Typ.

6. Verfahren nach einem der Ansprüche 1-5, wobei das Verfahren die folgenden Schritte umfasst:

- Empfangen von Datenpaketen, die an einen Bestimmungsort innerhalb des Datenkommunikationsnetzwerks adressiert sind (S410);
- Erfassen, von der Routing-Tabelle, der kleinsten Verbindungsschnittstellen-Höchstübertragungseinheits- $MTU_{L(i)}$ Größe der Verbindungsschnittstellen L(i), die einen Übertragungsweg P(n) zum Bestimmungsort begründen, wobei die kleinste Verbindungsschnittstelle-Höchstübertragungseinheits- $MTU_{L(i)}$ Größe der Verbindungsschnittstellen L(i) einen Übertragungsweg P(n) begründen, der die Weg-Höchstübertragungseinheits- $MTU_{P(n)}$ Größe für den Bestimmungsort darstellt (S420).

- Konfigurieren der Routing- und/oder Vermittlungsvorrichtung, um Datenpakete zu senden, die nicht größer sind als die kleinste Verbindungsschnittstellen-Höchstübertragungseinheits- $MTU_{L(i)}$ Größe der Verbindungsschnittstellen L(i), die einen Übertragungsweg P(n) zum Bestimmungsort begründen (S430).
- Weiterleiten der an den Bestimmungsort adressierten Datenpakete (S440).

7. Routing- und/oder Vermittlungsvorrichtungssteuerungsanordnung (110) zum Bestimmen einer Weg-Höchstübertragungseinheits- $MTU_{P(n)}$ Größe für Übertragungswege zwischen Kantenknoten in einem Datenkommunikationsnetzwerk und zum Aktualisieren von Routing-Tabellen (114), die mit Routing- und/oder Vermittlungsvorrichtungen (100) in den Kantenknoten verknüpft sind, die mit Verbindungsschnittstellen L(i) zusammen verbunden sind, die Übertragungswege P(n) zur Datenpaketübertragung begründen, wobei jede Verbindungsschnittstelle L(i) eine Verbindungsschnittstellen-Höchstübertragungseinheits- $MTU_{L(i)}$ Größe aufweist, wobei die Anordnung (110) Erfassungsmittel (118) umfasst, die konfiguriert sind, um eine Verbindungsschnittstellen-Höchstübertragungseinheits- $MTU_{L(i)}$ Größe zu erfassen, und Routing-Tabellenaktualisierungsmittel (116), die konfiguriert sind, um die Routing-Tabelle (114) zu aktualisieren, wobei die Routing-Tabellenaktualisierungsmittel (116) Berechnungsmittel (120) umfassen, die konfiguriert sind, um die Weg-Höchstübertragungseinheits- $MTU_{P(n)}$ Größe für jeden Bestimmungsort zu berechnen, wobei die Verbindungsschnittstelle L(i) für die erfasste Verbindungsschnittstellen-Höchstübertragungseinheits- $MTU_{L(i)}$ Größe einbezogen wird und wobei die Berechnungsmittel (120) weiter konfiguriert sind, um für jeden der Bestimmungsorte die kleinste Verbindungsschnittstellen-Höchstübertragungseinheits- $MTU_{L(i)}$ Größe der Verbindungsschnittstellen L(i), die einen Übertragungsweg P(n) zum Bestimmungsort begründen, zu berechnen und als die berechnete Höchstübertragungseinheits- $MTU_{P(n)}$ Größe auszuwählen, und wobei die Routing-Tabellenaktualisierungsmittel (116) konfiguriert sind, um die berechnete Höchstübertragungseinheits- $MTU_{P(n)}$ Größe für den Bestimmungsort in der Routing-Tabelle (114) zu speichern.

8. Anordnung (110) nach Anspruch 7, wobei die Erfassungsmittel (114) weiter konfiguriert sind, um Höchstübertragungseinheiten- $MTU_{L(i)}$ Größe für eine Verbindungsschnittstelle L(i) von einer empfangenen Verbindungszustand-Protokollnachricht zu erfassen, falls eine Verbindungszustand-Routing-Protokollnachricht von der empfangen wird.

9. Anordnung (110) nach einem der Ansprüche 7 oder 8, wobei die Anordnung einen Nachrichtengenerator (124) umfasst, der konfiguriert ist, um eine Verbindungszustand-Routing-Protokollnachricht, umfassend die Verbindungsschnittstellen-Höchstübertragungseinheits- $MTU_{L(i)}$ Größe, zu generieren und an einen oder mehrere Kantenknoten im Datenkommunikationsnetzwerk weiterzuleiten.

10. Anordnung nach einem der Ansprüche 8 oder 9, wobei die Verbindungszustand-Protokollnachricht eine Intermediate System to Intermediate System-, IS-IS-, Protokollnachricht ist, umfassend die Höchstübertragungseinheiten- $MTU_{L(i)}$ Größe für eine Verbindung L(i) als einen Typ-Länge-Wert, TLV.

11. Anordnung nach einem der Ansprüche 8 oder 9, wobei die Verbindungszustand-Protokollnachricht eine Open Shortest Path First-, OSPF-, Protokollnachricht ist, umfassend die Höchstübertragungseinheits- $MTU_{L(i)}$ Größe für eine Verbindung L(i) als einen Wert vom Link-State Advertisement LSA-Typ.

**Revendications**

1. Procédé de détermination d'une taille d'unité de transmission maximale $MTU_{P(n)}$ de trajet pour des trajets de transmission entre des nœuds périphériques dans un réseau de communication de données et de mise à jour de tables de routage associées à des dispositifs de routage et/ou de commutation dans lesdits nœuds périphériques, qui sont reliés ensemble avec des interfaces de liaison L(i) constituant des trajets de transmission P(n) pour la transmission de paquets de données, chaque interface de liaison L(i) présentant une taille d'unité de transmission maximale $MTU_{L(i)}$ d'interface de liaison, ledit procédé comprenant les étapes de :

- acquisition d'une taille d'unité de transmission maximale $MTU_{L(i)}$ d'interface de liaison pour une interface de liaison (Li) (S310) ;
- mise à jour de la table de routage en calculant la taille d'unité de transmission maximale $MTU_{P(n)}$ de trajet pour chaque destination dans laquelle l'interface de liaison L(i) pour la taille d'unité de transmission maximale $MTU_{L(i)}$ d'interface de liaison acquise est impliquée (S320), dans lequel la mise à jour comprend :

- le calcul et la sélection pour chacune desdites destinations de la plus basse taille d'unité de transmission maximale $MTU_{L(i)}$ d'interface de liaison des interfaces de liaison L(i) constituant un trajet de transmission P(n) vers ladite destination comme la taille d'unité de transmission maximale $MTU_{P(n)}$ calculée (S322) ;
- le stockage de la taille d'unité de transmission maximale $MTU_{P(n)}$ calculée pour la destination dans la table de routage (S324).

2. Procédé selon la revendication 1, dans lequel l'étape d'acquisition comprend en outre l'étape de :

- acquisition d'une taille d'unité de transmission maximale $MTU_{L(i)}$ pour une interface de liaison L(i) à partir d'un message de protocole d'état de liaison reçu (S312), si un message de protocole de routage d'état de liaison est reçu (S305).

3. Procédé selon l'une quelconque des revendications 1 ou 2, dans lequel le procédé comprend en outre l'étape de :

- génération et le transfert d'un message de protocole de routage d'état de liaison comprenant la taille d'unité de transmission maximale $MTU_{L(i)}$ d'interface de liaison vers un ou plusieurs des nœuds périphériques dans le réseau de communication de données (S330).

4. Procédé selon la revendication 2 ou 3, dans lequel le message de protocole d'état de liaison est un message de protocole de système intermédiaire à système intermédiaire, IS-IS, comprenant la taille d'unité de transmission maximale $MTU_{L(i)}$ pour une liaison L(i) comme une valeur de longueur type, TLV.

5. Procédé selon la revendication 2 ou 3, dans lequel le message de protocole d'état de liaison reçu est un message de protocole de premier trajet ouvert le plus court, OSPF, comprenant la taille d'unité de transmission maximale $MTU_{L(i)}$ pour une liaison L(i) comme une valeur de type d'annonce d'état de liaison, LSA.

6. Procédé selon l'une quelconque des revendications 1 à 5, dans lequel le procédé comprend en outre l'étape de :

- réception de paquets de données adressés à une destination dans ledit réseau de communication de données (S410) ;
- acquisition à partir de la table de routage de la plus basse taille d'unité de transmission maximale $MTU_{L(i)}$ d'interface de liaison des interfaces de liaison L(i) constituant un trajet de transmission P(n) vers ladite destination, ladite plus basse taille d'unité de transmission maximale $MTU_{L(i)}$ d'interface de liaison des interfaces de liaison L(i) constituant un trajet de transmission P(n) représentant la taille d'unité de transmission maximale $MTU_{P(n)}$ pour la destination (S420).
- configuration du dispositif de routage et/ou de commutation pour envoyer des paquets de données pas plus grands que la plus basse taille d'unité de transmission maximale $MTU_{L(i)}$ d'interface de liaison des interfaces de liaison L(i) constituant un trajet de transmission P(n) vers ladite destination (S430).
- transfert des paquets de données adressés à ladite destination (S440).

7. Agencement de contrôleur de dispositif de routage et/ou de commutation (110) pour la détermination d'une taille d'unité de transmission maximale $MTU_{P(n)}$ de trajet pour des trajets de transmission entre des nœuds périphériques dans un réseau de communication et pour la mise à jour de tables de routage (114) associées à des dispositifs de routage et/ou de commutation (100) dans lesdits nœuds périphériques, qui sont reliés ensemble avec des interfaces de liaison L(i) constituant des trajets de transmission P(n) pour la transmission de paquets de données, chaque interface de liaison L(i) présentant une taille d'unité de transmission maximale $MTU_{L(i)}$ d'interface de liaison, ledit agencement (110) comprenant des moyens d'acquisition (118) configurés pour acquérir une unité de transmission maximale $MTU_{L(i)}$ d'interface de liaison et des moyens de mise à jour de table de routage (116) configurés pour mettre à jour la table de routage (114), dans lequel lesdits moyens de mise à jour de table de routage (116) comprennent des moyens de calcul (120) configurés pour calculer la taille d'unité de transmission maximale $MTU_{P(n)}$ de trajet pour chaque destination dans laquelle l'interface de liaison L(i) pour la taille d'unité de transmission maximale $MTU_{L(i)}$ d'interface de liaison acquise est impliquée et dans lequel les moyens de calcul (120) sont en outre configurés pour calculer et sélectionner pour chacune desdites destinations la plus basse taille d'unité de transmission maximale $MTU_{L(i)}$ d'interface de liaison des interfaces de liaison L(i) constituant un trajet de transmission P(n) vers ladite destination comme la taille d'unité de transmission maximale $MTU_{P(n)}$ calculée, et dans lequel les moyens de mise à jour de table de routage (116) sont configurés pour stocker la taille d'unité de transmission maximale $MTU_{P(n)}$ calculée pour la destination dans la table de routage (114).

8. Agencement (110) selon la revendication 7, dans lequel les moyens d'acquisition (114) sont en outre configurés pour acquérir une taille d'unités de transmission maximale $MTU_{L(i)}$ pour une interface de liaison L(i) à partir d'un message de protocole d'état de liaison reçu, si un message de protocole de routage d'état de liaison est reçu par le.

9. Agencement (110) selon l'une quelconque des revendications 7 ou 8, dans lequel l'agencement comprend un générateur de message (124) configuré pour générer et transférer un message de protocole de routage d'état de liaison comprenant la taille d'unité de transmission maximale $MTU_{L(i)}$ d'interface de liaison vers un ou plusieurs des nœuds périphériques dans le réseau de communication de données.

10. Agencement selon la revendication 8 ou 9, dans lequel le message de protocole d'état de liaison est un message de protocole de système intermédiaire à système intermédiaire, IS-IS, comprenant la taille d'unité de transmission maximale $MTU_{L(i)}$ pour une liaison L(i) comme une valeur de longueur type, TLV.

11. Agencement selon la revendication 8 ou 9, dans lequel le message de protocole d'état de liaison est un message de protocole de premier trajet ouvert le plus court, OSPF, comprenant la taille d'unité de transmission maximale $MTU_{L(i)}$ pour une liaison L(i) comme une valeur de type d'annonce d'état de liaison, LSA.

Fig. 1

Fig, 2

300

Acquiring a link interface maximum transmission units $MTU_{L(i)}$ size for a link interface L(i)

S310

Updating the routing table by calculating the path maximum transmission unit $MTU_{P(n)}$ size for each destination wherein the link interface L(i) for the acquired link interface maximum transmission unit $MTU_{L(i)}$ size is involved.

S320

Fig. 3

301

Acquiring a link interface maximum transmission unit $MTU_{L(i)}$ size for a link interface L(i)

S310

Updating the routing table by calculating the path maximum transmission unit $MTU_{P(n)}$ size for each destination wherein the link interface L(i) for the acquired link interface maximum transmission unit $MTU_{L(i)}$ is involved.

S320

Calculating and selecting for each one of said destinations the lowest link interface maximum transmission unit $MTU_{L(i)}$ size of the link interfaces L(i) constituting a transmission path P(n) to said destination as the calculated maximum transmission unit $MTU_{P(n)}$ size

S322

Fig. 4

302

Acquiring a link interface maximum transmission units $MTU_{L(i)}$ for a link interface L(i) size

S310

Updating the routing table by calculating the path maximum transmission unit $MTU_{P(n)}$ size for each destination wherein the link interface L(i) for the acquired link interface maximum transmission unit $MTU_{L(i)}$ size is involved.

S320

Calculating and selecting for each one of said transmission paths P(n) the lowest link interface maximum transmission unit $MTU_{L(i)}$ size of the link interfaces L(i) constituting a transmission path P(n) as the calculated maximum transmission unit $MTU_{P(n)}$ size

S322

Storing the calculated maximum transmission unit $MTU_{P(n)}$ size for the destination in the routing table of the node

S324

Fig. 5

303

S305

Link-State
routing protocol message
received
?

No

Yes

Acquiring a link interface maximum
transmission units $MTU_{L(i)}$ size for a link
interface L(i)

S310

Acquiring maximum transmission
units $MTU_{L(i)}$ size of a link interface
L(i) in a linkstate routing protocol
message

S312

Updating the routing table by calculating the
path maximum transmission unit $MTU_{P(n)}$ for
each destination wherein the link interface
L(i) for the acquired link interface maximum
transmission unit $MTU_{L(i)}$ size is involved.

S320

Fig. 6

304

Acquiring a link interface maximum transmission units $MTU_{L(i)}$ size for a link interface L(i)

S310

Updating the routing table by calculating the path maximum transmission unit $MTU_{P(n)}$ size for each destination wherein the link interface L(i) for the acquired link interface maximum transmission unit $MTU_{L(i)}$ size is involved.

S320

Generating and transmitting a link-state routing protocol message comprising the link interface maximum transmission unit $MTU_{L(i)}$ size to one or more of the edge nodes in the data communications network

S330

Fig. 7

Fig. 8

305

S310

Acquiring a link interface maximum transmission units $MTU_{L(i)}$ size for a link interface L(i)

S320

Updating the routing table by calculating the path maximum transmission unit $MTU_{P(n)}$ size for each destination wherein the link interface L(i) for the acquired link interface maximum transmission unit $MTU_{L(i)}$ size is involved.

S330

Generating and transmitting a link-state routing protocol message comprising the link interface maximum transmission unit $MTU_{L(i)}$ size to one or more of the edge nodes in the data communications network

S400

Steps S410 – S440

Fig. 9

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008159150 A1
- WO 2008080792 A1